# DEMANDE DE BREVET EUROPEEN

(11) **EP 4 113 863 A1**
(43) Date de publication de la demande: **04.01.2023**
(21) Numéro de dépôt: 22181707.5
(22) Date de dépôt: 28.06.2022
(51) Int. Cl.: H04B 10/116

(54) **LUMINAIRE CONNECTABLE À UN RÉSEAU DE TÉLÉCOMMUNICATION**

(30) Priorité: 28.06.2021 FR 2106952
(71) Demandeur: Lucibel SA, 76360 Barentin (FR)
(72) Inventeur: DAVID, Thibault, 76240 BONSECOURS (FR); GRANOTIER, Pierre, 78600 LE MESNIL LE ROI (FR)
(74) Mandataire: Martin, Marie-Aude

(57) **Abrégé**

Le luminaire (10) est adapté pour la communication bidirectionnelle sans fil de données, du type comprenant un boîtier principal (12) délimitant une paroi frontale (14) comprenant une fenêtre (16) d'émission lumineuse, un module LIFI (40) configuré pour émettre et recevoir un faisceau de lumière modulé par des données à transmettre au travers de la fenêtre (16) et logé dans le boîtier principal (12), le luminaire (10) comprenant encore une prise d'alimentation électrique raccordable à un réseau d'alimentation électrique externe. Le luminaire comprend un module CPL (50) comprenant un port connecté électriquement à ladite prise configuré pour émettre et recevoir un signal de données haute fréquence transitant sur une ligne du réseau d'alimentation électrique externe et un port Ethernet configuré pour émettre et recevoir des données selon le protocole Ethernet respectivement à destination et en provenance du module LIFI (40).

## Description

La présente invention se rapporte au domaine de l'éclairage et concerne plus particulièrement un luminaire adapté pour former un relais optique de transmission de données dans un réseau de télécommunication tel que le réseau Internet. Elle s'applique particulièrement mais non exclusivement à un luminaire sur pied.

La présente invention concerne plus particulièrement à un luminaire adapté pour émettre ou recevoir un flux de données numériques selon un protocole de communication sans fil de type « Li-Fi ».

Un protocole de communication sans fil permet de relier sans fil plusieurs appareils informatiques au sein d'un réseau informatique afin de permettre la transmission de données entre eux.

On peut citer en tant que protocole de communication sans fil connu de l'art antérieur le « Wi-Fi » régi par la norme « IEEE 802 » relative aux réseaux locaux basés sur la transmission de données numériques. Le Wi-Fi permet notamment de créer un réseau local sans fil présentant un débit de transmission d'environ un gigabit par seconde, sur un rayon de plusieurs dizaines de mètres, en utilisant les ondes radioélectriques du spectre électromagnétique.

Une autre technique de communication numérique sans fil connue de l'art antérieur est celle basée sur la technologie « Li-Fi », abréviation de « Light-Fidelity » selon la terminologie anglo-saxonne, qui consiste à utiliser la partie optique du spectre électromagnétique (spectre visible ou infrarouge) à la place des ondes radioélectriques utilisées dans le cadre du Wi-Fi, pour diffuser numériquement un contenu multimédia tel que de la musique ou une vidéo, par exemple au travers du réseau Internet.

La communication selon le protocole Li-Fi consiste à moduler l'intensité lumineuse d'une source à diodes électroluminescentes (fréquemment désignées par l'acronyme « LED » pour « Light-Emitting Diode » en terminologie anglo-saxonne) reliée au réseau Internet. Les capacités de commutation entre un état « allumé » et un état « éteint » d'une LED peuvent aller jusqu'à un milliard de fois par seconde ce qui rend indétectable par l'œil humain les changements d'état de ces LEDs.

Selon une explication simplifiée, une suite d'états d'allumage et d'extinction d'une LED permet de créer un flux numérique correspondant au signal d'entrée reçu par le luminaire relié au réseau Internet. La capacité de commutation des LEDs à très haute fréquence permet de transmettre du son, des images, des vidéos, ou encore d'afficher le contenu d'une page Internet sur un terminal de communication numérique adapté pour recevoir des données de type LiFi.

Les avantages de la technique de communication par Li-Fi par rapport à la technique de communication par Wi-Fi sont multiples.

Parmi ces avantages, on peut citer notamment la vitesse de transmission des données par Li-Fi qui est largement supérieure à celle atteinte par la technologie WI-FI en ce qu'elle peut atteindre une vitesse supérieure à un gigabit par seconde, le fait par ailleurs qu'aucune onde radioélectrique, dont les effets sur la santé sont encore incertains, n'est transmise et enfin l'absence d'interférences entre les ondes radioélectriques et l'absence de brouillage électromagnétique.

De plus, le protocole de communication Li-Fi permet avantageusement de désengorger la bande de fréquence de 2,4 GigaHertz utilisée à ce jour par la quasitotalité des protocoles de communication sans fil.

En outre, les applications de la technologie de communication Li-Fi sont nombreuses. A titre d'exemple, cette technologie peut être utilisée dans les lieux ou espaces publics tels que la voirie, les parcs, les musées, les gares, etc. ou les espaces privés tels que les magasins mais également dans les environnements professionnels. Par exemple, il est possible grâce à la technologie Li-Fi de combiner à la fois l'éclairage d'un tableau dans un musée et la diffusion d'un contenu relatif à ce tableau.

Il existe donc un besoin de développer divers facteurs de forme de luminaires connectables à un réseau selon la technologie Li-Fi qui permettent de répondre aux diverses applications déjà couvertes par les appareils d'éclairage classiques.

L'intégration de la technologie Li-Fi selon les différents facteurs de forme d'appareils d'éclairage peut s'avérer particulièrement complexe, voire inadaptée. En effet, pour intégrer la technologie Li-Fi, il est nécessaire prévoir un emplacement dans le luminaire pour recevoir le module Li-Fi. Ce module Li-Fi consiste en général en un émetteur Li-Fi et un récepteur Li-Fi et forme un composant électronique relativement encombrant, son intégration dans l'appareil d'éclairage étant à l'origine de nouvelles contraintes de dimensionnement.

L'installation de telles luminaires pour des applications tertiaires s'avère relativement aisé car les immeubles de bureaux sont généralement équipés de faux plafonds.

Les contraintes pour une utilisation domestique sont plus nombreuses car les habitations classiques ne comprennent généralement pas de prise de type RJ45 au plafond ni même au niveau du sol et l'utilisation du WIFI est donc largement préféré pour couvrir toutes les pièces de l'habitation.

Un but de la présente invention est de fournir un luminaire adapté à la communication de données bidirectionnelle par la lumière selon la technologie LiFi ergonomique et simple à utiliser pour un usager dans son habitation.

A cet effet, l'invention a notamment pour objet un luminaire adapté pour la communication bidirectionnelle de données sans fil, du type comprenant un boîtier de réception principal d'axe principal X délimitant une ouverture frontale, une source d'éclairage agencée dans le boîtier pour émettre un faisceau de lumière visible au travers de l'ouverture frontale et une prise d'alimentation électrique d'au moins la source d'éclairage raccordable à un réseau d'alimentation électrique externe, caractérisé en ce que le luminaire comprend un module LIFI configuré pour émettre et recevoir un faisceau de lumière infrarouge modulé par des données à transmettre au travers de l'ouverture, logé dans le boîtier principal et un module CPL, couplé électriquement à ladite prise, configuré pour émettre et recevoir un signal de données haute fréquence transitant sur une ligne du réseau d'alimentation électrique externe **et en ce que** le luminaire comprend un capot arrière prolongeant le boîtier principal à partir d'une paroi dorsale du boîtier et étant dimensionné pour loger le module CPL, les modules CPL et LIFI étant couplés, pour la communication de données, au travers d'une ouverture de la paroi dorsale.

Grâce à l'invention, l'usager peut utiliser le luminaire dans toutes les pièces de son habitation équipées d'une prise d'alimentation électrique classique. Le luminaire intègre de façon discrète et esthétique un équipement de communication par la lumière par le réseau Internet sans recourir à l'utilisation du WIFI.

Dans un mode de réalisation préféré de l'invention, le module LIFI délimite une face frontale pourvue d'une cellule d'émission et réception du faisceau de lumière infrarouge agencée de façon sensiblement centrée selon l'axe.

Dans un mode de réalisation préféré de l'invention, le luminaire comprend une plaque annulaire de diffusion du faisceau de lumière visible délimitant un bord extérieur périphérique venant épouser sensiblement un contour interne d'une section transversale du boîtier et un bord intérieur entourant sensiblement la cellule du module LIFI.

Dans un mode de réalisation préféré de l'invention, la plaque diffusante s'étend sensiblement dans un plan transversal du boîtier en retrait par rapport à un bord d'extrémité frontal du boîtier, par exemple à mi-hauteur du boîtier.

Dans un mode de réalisation préféré de l'invention, le luminaire comprend une collerette de masquage intérieure pourvu d'éléments de fixation à la plaque de diffusion et dimensionnée pour s'étendre le long du bord interne de la plaque.

Dans un mode de réalisation préféré de l'invention, le module LIFI a une forme générale de disque pourvue latéralement d'un port Ethernet venant recevoir latéralement un connecteur Ethernet et la collerette de masquage est configurée pour masquer au moins partiellement le connecteur.

Dans un mode de réalisation préféré de l'invention, le boîtier principal comprend une paroi périphérique globalement de forme générale tronconique pourvue d'un sommet formant une paroi dorsale à partir de laquelle se projette extérieurement le capot, la paroi dorsale comprend une ouverture traversante de passage d'un câble de raccordement du module CPL au module LIFI s'étendant à l'intérieur du boîtier.

Dans un mode de réalisation préféré de l'invention, le capot a une forme générale cylindrique.

Dans un mode de réalisation préféré de l'invention, le luminaire comprend un pied formé par un tube creux au travers duquel s'étend un câble d'alimentation électrique reliant électriquement le module CPL à ladite prise.

Dans un mode de réalisation préféré de l'invention, le luminaire comprend un module d'interface d'injecteur de puissance de type POE, couplant le module CPL et le module LIFI, comprenant un câblage Ethernet de puissance.

Dans un mode de réalisation préféré de l'invention, le boîtier comprend un support allongé s'étendant longitudinalement en projection interne à partir d'une paroi dorsale du boîtier, le module LIFI étant monté de façon déportée par rapport à la paroi dorsale à l'extrémité libre du support.

Dans un mode de réalisation préféré de l'invention, la source d'éclairage de lumière visible s'étend autour du support.

Dans un mode de réalisation préféré de l'invention, la source d'éclairage comprend un ruban flexible de diodes électroluminescentes enroulé autour du support.

Dans un mode de réalisation préféré de l'invention, le support a une forme générale de bobine présentant deux faces d'extrémités en forme de disque reliées entre elles par un tube creux.

Dans un mode de réalisation préféré de l'invention, la surface interne du boîtier est essentiellement réfléchissante à la lumière visible.

D'autres caractéristiques et avantages de l'invention apparaîtront à la lumière de la description qui suit, faite en référence aux dessins annexés dans lesquels :
[Fig.1] : la [Fig.1] représente un schéma fonctionnel d'une architecture de communication comprenant un luminaire selon l'invention ;
[Fig.2] : la [Fig.2] est une vue en perspective de trois quart avant du luminaire selon l'invention représenté schématiquement sur la [Fig.1] ;
[Fig.3] : la [Fig.3] est une vue en perspective de face du luminaire de la [Fig.2] ;
[Fig.4] : la [Fig.4] est une vue partielle en perspective éclatée à échelle agrandie du luminaire de la [Fig.2] ;
[Fig.5] : la [Fig.5] est une vue en perspective et en transparence du luminaire de la [Fig.1] ;
[Fig.6] : la [Fig.6] est une vue partielle en perspective et à échelle d'une partie intérieure du luminaire ;
[Fig.7] : la [Fig.7] est une vue partielle et en perspective de face du luminaire de la [Fig.2] ;
[Fig.8] : la [Fig.8] est un schéma électrique du fonctionnement du luminaire.

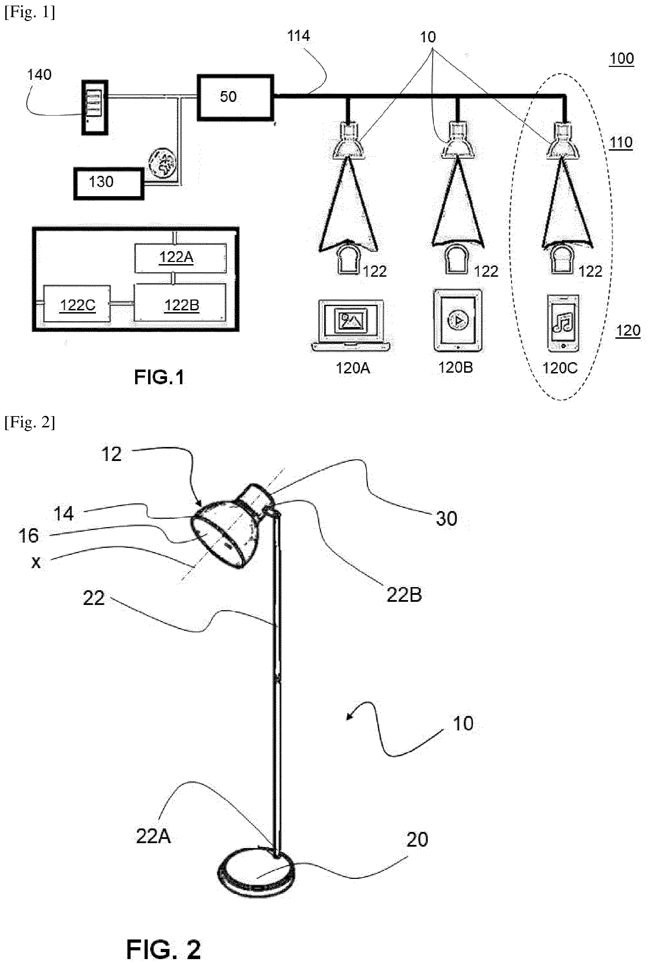

On a représenté de façon schématique sur la [Fig.1] une architecture de communication comprenant un ensemble de communication Li-Fi selon l'invention pour la transmission de données par la lumière avec un terminal distant. Cette architecture de communication est désignée par la référence générale 100 et l'ensemble de communication LIFI est désigné par la référence générale 110.

L'ensemble de communication 110 comprend un luminaire 10 et un terminal distant 120 qui seront décrits de façon détaillée par la suite. Sur la [Fig.1], on a représenté trois luminaires 10. Dans la suite de la description, on ne décrira qu'un seul des trois luminaires.

Conformément à l'invention, le luminaire 10 fait partie de l'ensemble 110 de communication sans fil connectable à un réseau de télécommunication 130. Le réseau de télécommunication 130 peut comprendre un réseau Internet, un réseau Intranet, un réseau Ethernet ou tout autre type de réseau de communication.

Dans cet exemple, le réseau de télécommunication 130 est le réseau Internet et le protocole de communication réseau est le protocole de communication TCP/IP.

De façon connue en soi, le réseau Internet est un réseau informatique mondial représentant l'interconnexion entre une pluralité de serveurs distants. Le réseau Internet 130 peut comprendre une pluralité de services associés tels qu'un service Web, un service de messagerie, un service de partage de fichiers poste à poste, un service de visioconférence. Généralement, ces différents services communiquent par exemple avec le protocole TCP/IP. Bien entendu, en variante, l'ensemble de communication sans fil 110 peut être connecté à un réseau Intranet local.

Le terminal distant 120 est dans l'exemple décrit une tablette électronique 120A. En variante, le terminal distant 120 peut être un téléphone portable 120B, ou un ordinateur de travail 120C, etc.

Dans l'exemple décrit, l'ensemble de communication 110 est propre à opérer la communication de données avec le terminal distant 120 selon un débit théorique supérieur à un gigabit par seconde, de préférence supérieur à sept gigabits par seconde.

Généralement, comme cela est illustré très schématiquement sur l'exemple de la [Fig.1], chaque terminal distant 120 est équipé d'une clé LIFI 122 (désignée en anglais par la terminologie « dongle »). La clé Li-Fi 122 comprend dans l'exemple illustré un photorécepteur 122A pour la réception d'un signal de données en provenance des luminaires 10, une unité 122B d'émission d'un signal de données généré à partir du terminal 120 et une unité 122C de traitement des signaux de données émis ou reçus.

On a également représenté sur l'architecture 100 un réseau d'alimentation électrique 140 tel que le réseau domestique d'une habitation.

Conformément à l'invention, le luminaire 10 est adapté pour la communication bidirectionnelle de données sans fil.

Dans l'exemple illustré sur la [Fig.2], le luminaire 10 est un luminaire sur pied. Ce luminaire 10 comprend par exemple un socle 20 et un pied 22 en forme générale de tige longitudinale monté à une de ses extrémités 22A sur le socle 20 et supportant à l'autre de ses extrémités 22B un corps de luminaire 12.

Conformément à l'invention, le corps 12 de luminaire 10 comprend un boîtier 14 de réception principal définissant un axe principal X et délimitant une ouverture frontale 16. Par exemple, le boîtier 14 a une forme générale de bol délimitant une paroi périphérique tronconique 14P, une paroi dorsale 14D et une paroi frontale 14F ouverte délimitant l'ouverture frontale 16.

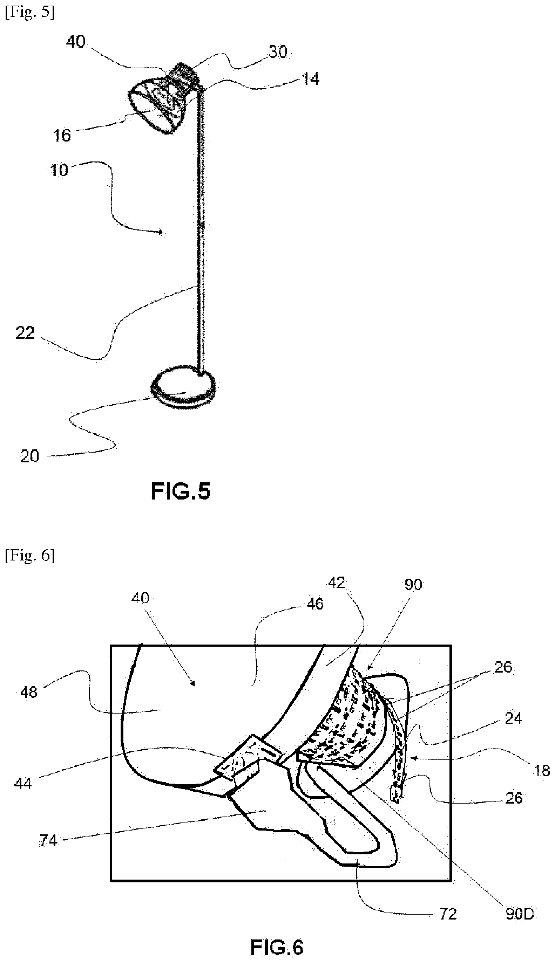

Le luminaire 10 comprend encore une source d'éclairage 18 agencée à l'intérieur du boîtier 14 pour émettre un faisceau de lumière visible au travers de l'ouverture frontale 16. On remarque que, sur la [Fig.6], la source d'éclairage 18 comprend une pluralité de diodes électroluminescentes 24, se présentant par exemple sous forme d'un ruban 26 flexible de diodes électroluminescentes 24. Le luminaire 10 comprend un diffuseur 28, par exemple s'étendant sensiblement au niveau de la fenêtre d'éclairage 16 (ouverture frontale 16) pour apporter une amélioration de l'homogénéité de l'éclairage en lumière visible.

Selon l'invention, le luminaire 10 comprend un module LIFI 40 configuré pour émettre et recevoir un faisceau de lumière infrarouge modulé par des données à transmettre au travers de l'ouverture 16.

De façon avantageuse, ce luminaire 10 forme un relais optique de transmission bidirectionnelle de données entre le module LIFI 40 adapté à l'émission et/ou la réception d'un faisceau de lumière infrarouge IR modulé par des données à transmettre selon la technologie LIFI et un terminal distant 120. Le principe de la technologie LIFI repose de façon bien connue en soi sur le codage et l'envoi de données via la modulation d'amplitude d'une source de lumineuse infrarouge ou visible (scintillation imperceptible à l'œil), selon un protocole bien défini et standardisé.

Au sens de la présente invention, on entend par lumière infrarouge, une lumière avec des longueurs d'onde comprises dans le spectre de rayonnement de proche infrarouge compris par exemple entre environ 700 à 1000 nanomètres jusqu'à 2500 nanomètres.

Conformément à l'invention, ce module LIFI 40 est adapté à l'émission et/ou la réception d'un faisceau de lumière infrarouge IR modulé par des données à transmettre selon un signal descendant en provenance du réseau de télécommunication 130 vers le terminal distant 120 ou selon un signal montant en provenance du terminal distant 120 vers le réseau de télécommunication 130. Le faisceau lumineux infrarouge IR comprend des longueurs d'onde supérieures par exemple à 850 nanomètres et de préférence comprises entre 850 nanomètres et 950 nanomètres.

Dans l'exemple illustré sur la figure, le module LIFI 40 se présente sous la forme d'un boîtier 42 comprenant un élément connecteur 44 de raccordement au réseau de télécommunication 130. En particulier, le module LIFI 40 est logé dans le boîtier principal 14 et délimite une face frontale 46, en regard de l'ouverture frontale 16, pourvue d'une cellule 48 d'émission et réception du faisceau de lumière infrarouge. La cellule 48 est en outre agencée de façon sensiblement centrée selon l'axe X. Le module LIFI 40 a dans cet exemple une forme générale de disque pourvue latéralement d'un port Ethernet venant recevoir latéralement un connecteur Ethernet.

Ce module LIFI 40 comprend encore un émetteur d'un signal modulé par des données à transmettre comprenant par exemple une source lumineuse émettant dans le spectre infrarouge. Le module LIFI 40 comprend également un récepteur d'un signal modulé par des données à transmettre comprenant un photorécepteur sensible à la lumière infrarouge.

De façon générale, le module générique LIFI 40 comporte une carte électronique sur laquelle sont montés un certain nombre de composants électroniques regroupés en un module de réception LIFI pour former le récepteur LIFI, un module d'émission LIFI pour former l'émetteur LIFI et encore un module de traitement (non représenté) des signaux de données. Un tel module de traitement permet, dans cet exemple, de traiter des signaux de données dit montant ou descendant, selon au moins un protocole de communication du réseau de télécommunication.

De façon classique, le luminaire 10 comprend encore une prise d'alimentation électrique (non représentée sur les figures) d'au moins la source d'éclairage 18, raccordable au réseau d'alimentation électrique externe 140 par l'intermédiaire d'une ligne 114 d'alimentation électrique.

Par ailleurs, afin d'intégrer la double fonction d'éclairage et de communication par la lumière sans gêne pour l'utilisateur, le diffuseur 28 se présente sous la forme d'une plaque annulaire délimitant un bord externe périphérique venant épouser sensiblement un contour interne d'une section transversale du boîtier 14 et un bord interne entourant sensiblement la cellule du module LIFI.

De préférence, le luminaire 10 comprend encore un module CPL 50 comprenant un port connecté électriquement à ladite prise configuré pour émettre et recevoir un signal de données haute fréquence transitant sur une ligne du réseau d'alimentation électrique externe 140 et un port Ethernet configuré pour émettre et recevoir des données selon le protocole Ethernet respectivement à destination et en provenance du module LIFI 40.

De façon connue en soi, la technologie de transmission par Courants Porteurs en Ligne utilise le réseau de distribution comme infrastructure de communication pour transporter l'information numérique. Elle consiste à superposer au courant électrique basse fréquence (typiquement en Europe 50 Hz ou 60Hz aux Etats-Unis) un signal à plus haute fréquence et de faible énergie. Ce signal à haute fréquence est propagé le long des lignes d'une installation électrique (par exemple le réseau d'alimentation électrique 140 d'une habitation). Lorsqu'il est reçu par un équipement de réception CPL (tel que module CPL 50), couramment appelé « modem » du réseau électrique considéré, ce signal analogique peut être décodé, sous forme d'un flux de bits, afin que les données qu'il véhicule soient restituées sur un terminal adéquat (ici un des terminaux distants 120).

A cet effet, le luminaire 10 comprend encore un capot arrière 30 prolongeant le boîtier principal 14 à partir de la paroi dorsale 14D du boîtier 14 et étant dimensionné pour loger le module CPL 50.

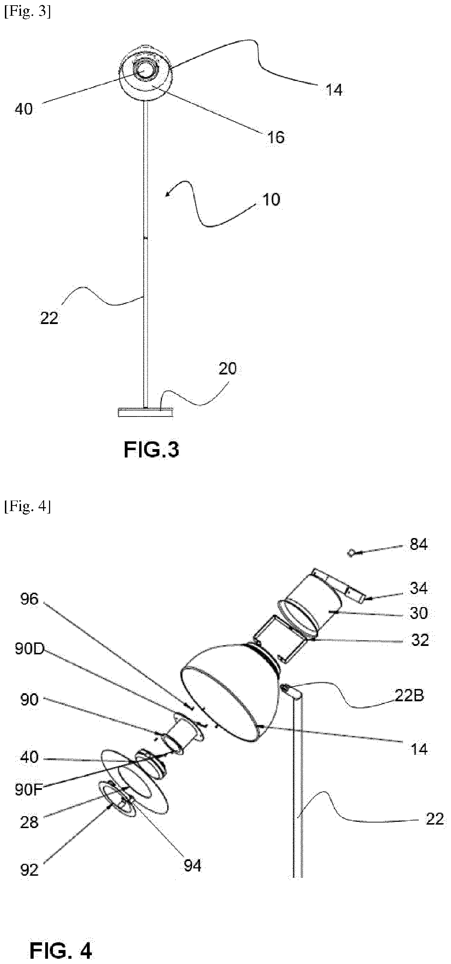

Comme cela est visible sur la [Fig.4], le boîtier principal 14 comprend la paroi périphérique 14P globalement de forme générale tronconique pourvue d'un sommet formant la paroi dorsale 14D à partir de laquelle se projette extérieurement le capot 30. Selon l'invention, la paroi dorsale 14D du boîtier 14 comprend une ouverture traversante de passage d'un câble de raccordement du module CPL 50 au module LIFI 40 s'étendant à l'intérieur du boîtier 14. De préférence, le capot 30 a une forme générale cylindrique. La paroi dorsale 14D du boîtier 14 est par exemple percée d'un trou de diamètre suffisant pour le passage d'un câble électrique ou de communication par le protocole Internet.

Le luminaire 10 comprend en outre un étrier de fixation 32 en forme générale de U destiné à être rapporté de préférence à l'extérieur de la paroi dorsale 14D du boîtier 14 par ses extrémités. Le capot 30 est de préférence monté en force sur l'étrier 32 qui vient retenir par l'intérieur le capot 30.

En outre, comme cela ressort clairement de la [Fig.2], le corps 12 du luminaire 10 est monté à l'extrémité 22B du pied 22 par l'intermédiaire d'un arceau 34 à deux branches qui viennent retenir le capot cylindrique 30 par des moyens de fixation classiques montés en extrémité de chacune des branches de l'arceau 34.

Le pied 22 est formé par exemple par un tube creux au travers duquel s'étend un câble d'alimentation électrique reliant électriquement le module CPL 50 à ladite prise.

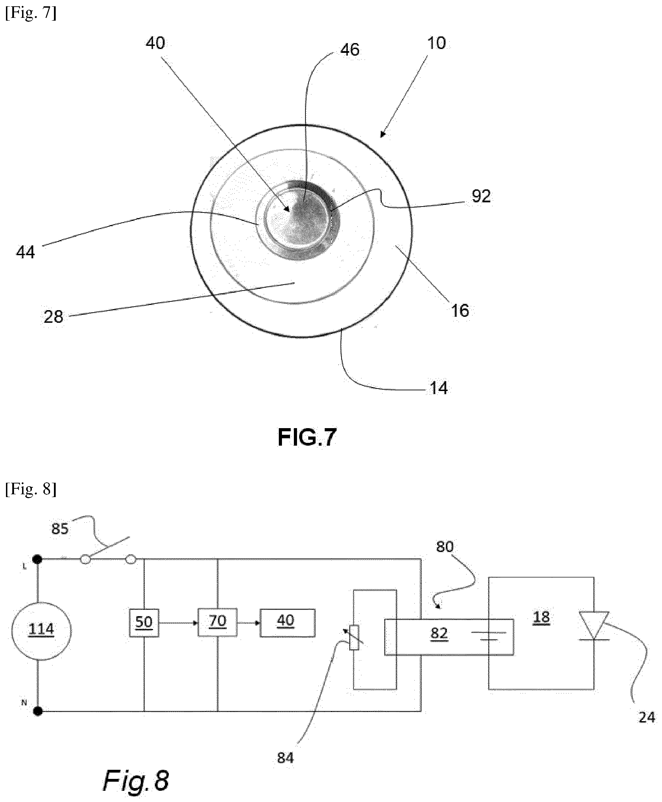

En outre, dans l'exemple décrit et illustré schématiquement sur la [Fig.8], le luminaire 10 comprend un module 70 d'interface d'injection type POE, couplant le module CPL 50 et le module LIFI 40, comprenant un câblage Ethernet de puissance 72 pourvu d'un embout connecteur 74 (visibles sur la [Fig.6]). Le luminaire 10 comprend encore un module 80 de contrôle de la source d'éclairage 18 comprenant la pluralité de diodes électroluminescentes 24.

Par exemple, le module de contrôle 80 est communément désigné selon la terminologie anglo-saxonne « driver ». Le module de contrôle 80 comprend un « driver LED » 82 et un potentiomètre 84. De façon connue en soi, le potentiomètre 84 comprend par exemple une résistance variable dont la valeur ohmique est ajustable au moyen d'une molette ([Fig.4]) manipulable par un utilisateur du luminaire 10 et permettant le réglage de la luminosité des LEDs de la source d'éclairage 18.

On a représenté de façon schématique sur la [Fig.8], un circuit électrique de fonctionnement des organes électriques du luminaire 10. Dans ce schéma, le module CPL 50, le module d'injection POE 70 et le module de contrôle de la source d'éclairage 18 sont montés en parallèle. Le circuit électrique comprend en outre des bornes de raccordement au réseau d'alimentation électrique 140 par l'intermédiaire d'un interrupteur 85 accessible sur le luminaire 10 pour mettre hors tension ou en tension le circuit électrique.

Dans l'exemple illustré sur les figures, on note que la plaque diffusante 28 et la cellule visible du module LIFI 40 s'étendent sensiblement dans un même plan transversal du boîtier 14 en retrait par rapport à un bord d'extrémité frontal du boîtier 14, par exemple à mi-hauteur du boîtier 14 selon la direction de l'axe principal.

Par exemple, le boîtier 14 comprend un support allongé 90 s'étendant longitudinalement en projection interne à partir d'une paroi dorsale 14D du boîtier 14, le module LIFI 40 étant monté de façon déportée par rapport à la paroi dorsale 14D sur l'extrémité libre du support 80.

De préférence, la source d'éclairage 18 de lumière visible s'étend autour du support 90. Dans l'exemple illustré sur la [Fig.6], on voit que le ruban flexible 26 de diodes électroluminescentes 24 est enroulé autour du support 90. De préférence, le support 90 a une forme générale de bobine présentant deux faces d'extrémités en forme de disque reliées entre elles par un tube creux adapté pour le passage de câbles électriques.

En outre, le luminaire 10 comprend un collier de fixation 92 pourvu d'éléments de fixation libérables 94 à l'intérieur de l'ouverture de la plaque de diffusion 28 et dimensionné pour suivre sensiblement le bord interne.

De préférence, le collier de fixation 92 est configuré pour masquer au moins partiellement le connecteur 74 qui vient en prise latéralement sur le module LIFI comme cela apparaît clairement sur la [Fig.6].

De préférence, la surface interne du boîtier 14 est essentiellement réfléchissante à la lumière visible. La surface interne du boîtier 14 se comporte à l'intérieur de son volume comme un réflecteur multidirectionnel de la lumière visible émise par la source d'éclairage 18, principalement par un phénomène de diffusion multidirectionnelle de la lumière émise par la source d'éclairage 18. Par exemple, chaque diode électroluminescente peut comprendre une optique primaire diffusant la lumière émise par chacune des diodes de façon multidirectionnelle qui vient se réfléchir sur les faces internes du boîtier 14.

Il va être succinctement décrit le principe de fonctionnement de l'ensemble de communication selon l'invention.

Le luminaire 10 de l'invention peut être installé dans une habitation classique. Par exemple, comme le luminaire 10 est autoportant, il peut être positionné dans n'importe quelle pièce de l'habitation à proximité d'une prise de courant de secteur classique. Le luminaire 10 est alors raccordé par l'intermédiaire d'une prise femelle sur une prise mâle de l'installation électrique 140 de l'habitation.

L'utilisateur s'installe alors sous le halo de lumière visible. On comprend bien que l'invention permet d'intégrer une technologie Li-Fi dans un luminaire 10 sans nuire ni à la qualité de l'homogénéité de l'éclairage ni à la perception globale du luminaire 10 par un usager.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant la forme de détail du luminaire.

## Revendications

1. Luminaire (10) adapté pour la communication bidirectionnelle de données sans fil, du type comprenant un boîtier de réception principal (14) d' axe principal X délimitant une ouverture frontale (16), une source d'éclairage (18) agencée dans le boîtier (14) pour émettre un faisceau de lumière visible au travers de l'ouverture frontale (16) et une prise d'alimentation électrique d'au moins la source d'éclairage (18) raccordable à un réseau d'alimentation électrique externe (140), **caractérisé en ce que** le luminaire (10) comprend un module LIFI (40) configuré pour émettre et recevoir un faisceau de lumière infrarouge modulé par des données à transmettre au travers de l'ouverture (16), logé dans le boîtier principal (14) et un module CPL (50), couplé électriquement à ladite prise, configuré pour émettre et recevoir un signal de données haute fréquence transitant sur une ligne du réseau d'alimentation électrique externe (140) **et en ce que** le luminaire (10) comprend un capot arrière (30) prolongeant le boîtier principal (14) à partir d'une paroi dorsale (14D) du boîtier (14) et étant dimensionné pour loger le module CPL (50), les modules CPL (50) et LIFI (40) étant couplés, pour la communication de données, au travers d'une ouverture de la paroi dorsale (14D).

2. Luminaire (10) selon la revendication précédente, dans lequel le module LIFI (40) délimite une face frontale (46) pourvue d'une cellule (48) d'émission et réception du faisceau de lumière infrarouge agencée de façon sensiblement centrée selon l'axe (X).

3. Luminaire (10) selon la revendication précédente, comprenant une plaque (28) annulaire de diffusion du faisceau de lumière visible délimitant un bord extérieur périphérique venant épouser sensiblement un contour interne d'une section transversale du boîtier (14) et un bord intérieur entourant sensiblement la cellule (48) du module LIFI (40).

4. Luminaire (10) selon la revendication précédente, dans lequel la plaque diffusante (28) s'étend sensiblement dans un plan transversal du boîtier (14) en retrait par rapport à un bord d'extrémité frontale du boîtier (14), par exemple à mi-hauteur du boîtier (14).

5. Luminaire (10) selon la revendication 3 ou 4, dans lequel le luminaire (10) comprend une collerette (92) de masquage intérieure pourvu d'éléments de fixation à la plaque de diffusion (28) et dimensionnée pour s'étendre le long du bord interne de la plaque (28).

6. Luminaire (10) selon la revendication précédente, dans lequel le module LIFI (40) a une forme générale de disque pourvue latéralement d'un port Ethernet (44) venant recevoir latéralement un connecteur Ethernet (74) et la collerette de masquage (92) est configurée pour masquer au moins partiellement le connecteur (74).

7. Luminaire (10) selon l'une quelconque des revendications précédentes, dans lequel le boîtier principal (14) comprend une paroi périphérique (14P) globalement de forme générale tronconique pourvue d'un sommet formant une paroi dorsale (14D) à partir de laquelle se projette extérieurement le capot (30), la paroi dorsale (14D) comprend une ouverture traversante de passage d'un câble de raccordement du module CPL (50) au module LIFI (40) s'étendant à l'intérieur du boîtier (14).

8. Luminaire (10) selon l'une quelconque des revendications précédentes, dans lequel le capot (30) a une forme générale cylindrique.

9. Luminaire (10) selon l'une quelconque des revendications précédentes, dans lequel le luminaire (10) comprend un pied (22) formé par un tube creux au travers duquel s'étend un câble d'alimentation électrique reliant électriquement le module CPL (50) à ladite prise.

10. Luminaire (10) selon l'une quelconque des revendications précédentes, comprenant un module d'interface (70) d'injecteur de puissance de type POE, couplant le module CPL (50) et le module LIFI (40), comprenant un câblage Ethernet de puissance.

11. Luminaire (10) selon l'une quelconque des revendications précédentes, dans lequel le boîtier (14) comprend un support allongé (90) s'étendant longitudinalement en projection interne à partir d'une paroi dorsale (14D) du boîtier (14), le module LIFI (40) étant monté de façon déportée par rapport à la paroi dorsale (14D) à l'extrémité libre du support (90).

12. Luminaire (10) selon la revendication précédente, dans lequel la source d'éclairage de lumière visible s'étend autour du support (90).

13. Luminaire (10) selon la revendication précédente, dans lequel la source d'éclairage (18) comprend un ruban flexible (26) de diodes électroluminescentes (24) enroulé autour du support (90).

14. Luminaire (10) selon l'une quelconque des revendications 11 à 13, dans lequel le support (90) a une forme générale de bobine présentant deux faces d'extrémités en forme de disque reliées entre elles par un tube creux.

15. Luminaire (10) selon l'une quelconque des revendications précédentes, dans lequel la surface interne du boîtier (14) est essentiellement réfléchissante à la lumière visible.
